# EUROPEAN PATENT APPLICATION

(11) **EP 4 624 233 A1**
(43) Date of publication of application: **01.10.2025**
(21) Application number: 24167344.1
(22) Date of filing: 28.03.2024
(51) Int. Cl.: B60L 53/18, B60L 53/30

(54) **CONDUCTOR CARRIER SYSTEM FOR FAST CHARGING SYSTEMS AND MEGAWATT CHARGING SYSTEMS**

(71) Applicant: ABB E-mobility B.V., 2629 JG Delft (NL)
(72) Inventor: STOJADINOVIC, Milos, 5400 Baden (CH); CHRISTEN, Daniel, 8610 Uster (CH); GAUTSCHI, Simon, 8006 Zurich (CH); ROTHMUND, Daniel, 5243 Mülligen (CH)
(74) Representative: Zimmermann & Partner Patentanwälte mbB

(57) **Abstract**

A charging arm system for an electric vehicle charging station is provided. The charging system includes a first rigid arm having a first proximal end and a first distal end, the first proximal end configured for connecting to a power supply, a first support point rotatably supporting the first proximal end, a second rigid arm having a second proximal end and a second distal end, the second proximal end being rotatably coupled to the first distal end, a charging connector assembly coupled to the second distal end and configured for connecting to a charging inlet of an electric vehicle, and a vertical support coupled to the second rigid arm or the charging connector assembly for supporting the second rigid arm or the charging connector assembly. The first rigid arm comprises a first conductor section and the second rigid arm comprises a second conductor section, and the first conductor section and the second conductor section are electrically connected for providing electric power from the power supply to the electric vehicle.

## Description

### Field of the disclosure

The invention is in the field of electrical vehicle charging systems. Embodiments of the present application relate to a charging arm system for an electric vehicle charging station and an electric vehicle charging station for charging an electric vehicle.

### Technical Background

Next generation charging systems for electric cars, trucks, buses, ships, VTOLs etc. are developed to deliver anywhere between few hundreds of kilowatts to few megawatts of power. This power has to be provided from the charging station to the electric vehicle through the charging cables. The charging cables need to be specifically designed and rated for these high powers, particularly for the charging voltages and currents. To provide power levels up to a few megawatts, a charging voltage and a charging current can be increased. The voltage levels of vehicle batteries are limited to within the limits defined in the low voltage standards (< 1500VDC). This results in the need for cables with current carrying capabilities up to several kA, which can be achieved by increasing a cross-section of the conductors. The copper cross-sections of such cables can be in the range of several cm² and a length is generally in the range of 5-10 m in order to allow for good handling of the charging cable. These cable dimensions will result in weights in the range of hundreds of kilograms, resulting in that practical usability of such cables by the average user is problematic and questionable.

This invention addresses these issues, by providing a charging arm system for an electric vehicle charging station.

### Summary of the disclosure

Reference will now be made in detail to the various embodiments of the present disclosure, one or more examples of which are illustrated in the figures. Generally, only the differences with respect to individual embodiments are described. Each example is provided by way of explanation and is not meant as a limitation of the present disclosure. Features illustrated or described as part of one embodiment can be used on or in conjunction with other embodiments to yield yet a further embodiment. It is intended that the description includes such modifications and variations.

In light of the above, a charging arm system for an electric vehicle charging station according to claim 1 and an electric vehicle charging station for charging an electric vehicle according to claim 16 is provided. Further aspects, advantages, and features are apparent from the dependent claims, the description, and the accompanying drawings. Electrical vehicles may, for example, be cars, buses, boats, ships, EVTOLs, mining trucks, AGVs, or any other type of electrical vehicle.

According to an aspect, a charging arm system for an electric vehicle charging station is provided. The charging system includes a first rigid arm having a first proximal end and a first distal end, the first proximal end configured for connecting to a power supply, a first support point rotatably supporting the first proximal end, a second rigid arm having a second proximal end and a second distal end, the second proximal end being rotatably coupled to the first distal end, a charging connector assembly coupled to the second distal end and configured for connecting to a charging inlet of an electric vehicle, and a vertical support coupled to the second rigid arm or the charging connector assembly for supporting the second rigid arm or the charging connector assembly. The first rigid arm comprises a first conductor section and the second rigid arm comprises a second conductor section, and the first conductor section and the second conductor section are electrically connected for providing electric power from the power supply to the electric vehicle.

Throughout this description, the terms "connect", "connecting", "connected", and other similar terms, refer to electrical connection, i.e. have the meaning that two elements are electrically connected to each other. Two elements can be directly connected to each other without any further electrical components therebetween. Two elements can be indirectly connected to each other through additional electrical components. Throughout this application, the terms "couple", "coupling", "coupled", and other similar terms, refer to mechanical connections, i.e. have the meaning that two elements are mechanically connected to each other. Two elements can be directly coupled to each other without any further mechanical components therebetween. Two elements can be indirectly coupled to each other through additional electrical elements. Two elements can be connected and coupled to each other, i.e. can be electrically connected and mechanically connected to each other.

Throughout this description, features may be described with respect to a single element, such as "first rigid arm", "first conductor", "first support point", and other features for which multiple corresponding elements can be provided in the charging arm system, it is understood that any features described with respect to these single elements apply to all corresponding elements, e.g. "second rigid arm" or "second conductor". That is, features described with respect to a "rigid arm" or a "first rigid arm" apply to a "first rigid arm", a "second rigid arm", a "third rigid arm", and/or further "rigid arms", or features described with respect to a "conductor section" or a "first conductor section" apply to a "first conductor section", "a second conductor section", a "third conductor section", or further "conductor sections".

The charging arm system according to the present application includes a first rigid arm and a second rigid arm. The first rigid arm has a first proximal end and a first distal end. The first proximal end is configured for connecting to a power supply. The second rigid arm has a second proximal end and a second distal end, the second proximal end being rotatably coupled to the first distal end. The rigid arms, for example, the first rigid arm and the second rigid arm, have an extended direction. The rigid arms may extend in the extended direction. The rigid arms may have a first end in the extended direction and a second end opposite, the first end, in the extended direction. The rigid arms may extend from the first end to the second end. The proximal end and the distal end of the rigid arms, for example, the first rigid arm and the second rigid arm, may describe the two ends in the extended direction. The proximal end and the distal end can describe an orientation of the rigid arms. The rigid arms may be oriented such that a proximal end of a rigid arm is closer, measured along the charging arm system, to a charging station than a distal end of the rigid arm. The rigid arms may be oriented such that a distal end of a rigid arm is closer, measured along the charging arm system, to the charging connector assembly than the proximal end of the rigid arm.

The charging arm system according to the present application includes a first support point for rotatably supporting the first proximal end. The first rigid arm may be rotatable around the first support point. A first rotational position may describe a position of the first rigid arm. The first rotational position may, for example, be with respect to a marking provided on the first support point or with respect to a support structure of an electric vehicle charging station. The first support point may be configured to be coupled to an electric vehicle charging station, particularly a support structure of an electric vehicle charging station. The first support point may be fixedly or movably attached to the charging station. The first support point may be attached to the charging station to be linearly movable. The first support point may be configured to be coupled to a mechanical fixation point of an electric vehicle charging station.

The mechanical fixation point may be fixedly or movably attached to the charging station, particularly the support structure of the charging station. The first support point may be formed integrally with the mechanical fixation point. The first support point may be the mechanical fixation point. The charging system may comprise a second support point for rotatably supporting the second proximal end, particularly for rotatably supporting the first distal end and the second proximal end. The second support point may be designed similar to the first support point.

The charging system according to the present application includes a charging connector assembly coupled to the second distal end and configured for connecting to a charging inlet of an electric vehicle. The charging connector assembly may comprise a charging connector having a charging conductor. The charging connector may be configured for connecting to a charging inlet of an electric vehicle, particularly for connecting the charging conductor to the charging inlet of an electric vehicle. The charging connector assembly may be electrically connected to an electric vehicle charging station for receiving a charging power. The charging connector assembly may be indirectly connected to an electric vehicle charging station. The charging connector, particularly the charging conductor, may be electrically connected, particularly indirectly connected, to an electric vehicle charging station for receiving a charging power.

The charging system according to the present application includes a vertical support coupled to the second rigid arm or the charging connector assembly for supporting the second rigid arm or the charging connector assembly. The vertical support may be configured for supporting a weight of the second rigid arm and/or the charging connector assembly. The vertical support may be connected to an electric vehicle charging station. For example, the vertical support may be connected to an overhead support structure of an electric vehicle charging station. The vertical support may be a mechanical member configured for supporting the second rigid arm or the charging connector assembly. The vertical support may be an elastic member configured for supporting the second rigid arm or the charging connector assembly. The elastic member may, for example, be a coil, a spring and/or be made of an elastic material. According to an embodiment, the first support point is attachable to the electric vehicle charging station, particularly attachable to an overhead support structure of the electric vehicle charging station.

The first rigid arm comprises a first conductor section. The second rigid arm comprises a second conductor section. The first conductor section and the second conductor section are electrically connected for providing electric power from the power supply to the electric vehicle. The first conductor section may extend along an extended direction of the firs rigid arm. The first conductor section may substantially extend from the first proximal end to a first distal end. The second conductor section may extend along an extended direction of the second rigid arm. The second conductor section may substantially extend from the first proximal end to the first distal end.

The first conductor section may be electrically connected to a charging station, particularly to a power supply of a charging station. The first conductor section may be directly connected to the charging station. The first conductor section may be indirectly connected to the charging station. The first conductor section may be connected to an electric vehicle charging station for receiving a charging power, particularly from the power supply. The second conductor section may be electrically connected to a charging inlet of an electric vehicle. The second conductor section may be directly connected to a charging inlet of an electric vehicle. The second conductor section may be indirectly connected to a charging inlet of an electric vehicle. The second conductor section may be coupled to the charging connector assembly. The second conductor section may be coupled to the charging connector. The second conductor section may be coupled to the charging conductor.

In some embodiments, the charging arm system may include at least one third rigid arm having a third proximal end connectable to the power supply and a third distal end coupled to the first proximal end, the at least one third rigid arm comprising third conductor sections that are electrically connected to the first conductor section. The third proximal end may be closer to the charging station, measured along the charging arm system, than the third distal end.

The rigid arms may be coupled to each other, for example, the first rigid arm is coupled to the second rigid arm. The third rigid arm may be coupled to the first rigid arm. The rigid arms may be coupled to each other such that a distal end of one rigid arm is coupled to a proximal end of another rigid arm. The rigid arms may form a chain of rigid arms. The rigid arms may be coupled such that a distal end of one rigid arm is coupled to a proximal end of another rigid arm to form a chain. The conductor sections of the rigid arms forming a chain may be connected to each other. The conductor sections of the rigid arms forming a chain may be connected in a similar manner. The conductor sections of the rigid arms forming a chain may be connected to each other to form a chain of conductor sections. One or more third rigid arms may be coupled to each other such that a proximal end of one rigid arm is coupled to a distal end of another rigid arm. The one or more third rigid arms may be coupled to each other to form a chain of third rigid arms having a chain proximal end configured for connecting to a power supply and a chain distal end configured for coupling to the first proximal end.

The third conductor section may be electrically connected to an electric vehicle charging station, particularly to a power supply of an electric vehicle charging station. The third conductor section may be directly connected to the charging station. The third conductor section may be indirectly connected to the charging station. The third conductor section may be connected to an electric vehicle charging station for receiving a charging power, particularly from the power supply. One or more third conductor sections may be electrically connected to each other.

In some embodiments, the charging arm system includes at least one third support point rotatably supporting the third proximal end. The third support point may be attachable to a support structure of the electric vehicle charging station. The charging arm system may comprise a third support point for each third rigid arm, such that each third rigid arm is support by a third support point. Each third support point may be attachable to a support structure of the electric vehicle charging station. The third support points may be attached at third mechanical fixation points to the support structure. The third mechanical fixation points may be fixedly or moveably attached to the support. The third support points may be formed integrally with the third mechanical fixation points. The third support points may be the third mechanical fixation points.

The charging arm system for an electric vehicle charging station according to the present invention provides a structure, particularly a lightweight structure, that serves as a conductor carrier and supports user manipulation of the charging arm system, particularly allows easier user manipulation. Beneficially, the charging arm system acts at the same time as a main carrier, i.e. supports most of a weight of the charging arm system by itself, such that a user has to support less weight when handling the charging arm system. The charging arm system supporting most of its own weight allows to provide different option of conductors, i.e. the conductors provided in the rigid arms, e.g. the first rigid arm and/or the second rigid arm. Particularly, conductors can be chosen without or with only minor weight restrictions. For example, conductors can be chosen as thicker stranded cables which can eliminate the need for water-cooling, multiple thinner stranded cables that can improve overall carrier flexibility, solid and/or flexible busbars as electrical conductors for straight sections and flexible busbars as interconnection at the joints. Flexible busbars can be produced either braided, with foil or with any other method. Braided busbars have less movement restrictions, i.e. more freedom of movement, and can allow to move the non-fixed joints in any direction. Advantageously, this can allow easier connection to the vehicle charging outlet. Beneficially, the charging arm system according to the present invention provides a simple and easy to manufacture solution to handling of charging cables for high-power charging stations for electrical vehicles, particularly MW charging stations for electric vehicles. This solution is keeping the system relatively simple without major impact on overall costs and reliability.

In addition to the above, several additional advantages are observed. The structure can contain springs on the joints, i.e. proximate to a location where two rigid arms are coupled, e.g. where the first rigid arm is coupled to the second rigid arm, to further support extension and/or retraction of the system. The carrier structure, particularly the rigid arms, more particularly a housing of the rigid arms, can be designed such that they enclose the conductor sections. The material of the carrier structure, particularly of the rigid arm, more particularly of the housing of the rigid arm, can be chosen such that the material can serve as a second isolation barrier for the conductor sections. Beneficially, conductor costs can be reduced as only single isolation layer can be used without impacting the functional safety. The charging arm system is provided with rigid arms and may be installed without hanging cables, that is hanging cables, that can pose as a hazard, e.g. they can be run over, can be eliminated. Additionally, dropping of a connector, for example by a user or by environmental influences, is prevented, resulting in reduced maintenance costs.

The charging arm system according to the present invention is a charging arm system for an electric vehicle charging station. The charging station may be a DC fast charger. The charging arm system may be coupled to the DC fast charger, particularly to a housing of the DC fast charger. The charging arm system may be coupled to the DC fast charger in one or more mechanical fixation points. The mechanical fixation points may be linearly movable, e.g. along the housing of the DC fast charger, or fixedly connected to the DC fast charger, particularly the housing of the DC fast charger. The mechanical fixation points may allow rotation of the charging arm system around the mechanical fixation points. For example, the first support point may be coupled to the mechanical fixation point and/or correspond to the mechanical fixation point. The DC fast charger may have a housing providing a vertical support structure extending in a vertical direction and an overhead horizontal support structure extending in a horizontal direction. The charging arm system may be coupled to the vertical support structure in a first mechanical fixation point and/or may be coupled to the horizontal support structure in a second mechanical fixation point. The first mechanical fixation point may be linearly movable along the vertical support structure, particularly linearly movable in the vertical direction. The second mechanical fixation point may be linearly movable along the horizontal support structure, particularly linearly movable in the horizontal direction. The vertical support may be coupled to the DC fast charger, particularly to the housing of the DC fast charger. The vertical support may be coupled to the horizontal support structure.

The charging station may be a megawatt charging station (MCS), for example, for heavy duty vehicles such as electric trucks, buses, boats, ships, EVTOLs, mining trucks, AGVs or any other suitable electric vehicle. The MCS may have an overhead structure comprising a horizontal support structure extending in a horizontal direction. For example, the overhead structure may be a roof structure, particularly a roof structure for installing solar panels. The charging arm system according to the present application may be coupled to the MCS in one or more mechanical fixation points. The first mechanical fixation points may be linearly moveable or fixedly connected to the MCS. The mechanical fixation points may allow rotation of the charging arm system around the mechanical fixation points. For example, the first support point may be coupled to the mechanical fixation point and/or correspond to the mechanical fixation point. The charging arm system may be coupled to the overhead structure of the MCS in a first mechanical fixation point, more particularly to the horizontal support structure. The vertical support may be coupled to the MCS. The vertical support may be coupled to the overhead structure, particularly the horizontal support structure.

According to an embodiment, the charging arm system includes a first-arm vertical support coupled to the first rigid arm for supporting the first rigid arm. The first-arm vertical support may be configured to support a weight of the first rigid arm. The first-arm vertical support may be attachable to an electric vehicle charging station. The first-arm vertical support may be attachable to an overhead support structure of an electric vehicle charging station for providing support in a substantially vertical direction to the first rigid arm. The first-arm vertical support may be a mechanical member configured for supporting the first rigid arm. The first-arm vertical support may be an elastic member configured for supporting the first rigid arm. The elastic member may, for example, be a coil, a spring and/or be made of an elastic material.

According to an embodiment, the charging arm system includes an elastic member configured for biasing the first rigid arm and the second rigid arm into a neutral position. The elastic member may be coupled to the first rigid arm and the second rigid arm. The first rigid arm is rotatably coupled at the first distal end to the second rigid arm at the second proximal end. The first rigid arm and the second rigid arm may be rotated with respect to each other. The elastic member may define a neutral position of the first rigid arm to the second rigid arm. The neutral position may define a rotational position of the first rigid arm to the second rigid arm. In the neutral position, a tension of the elastic member may be minimized compared to other rotational positions of the first rigid arm to the second rigid arm. Applying an external force to rotate the first rigid arm and the second rigid arm away from the neutral position may tension the elastic member. The elastic member may provide a force acting against the force that is rotating the first rigid arm and the second rigid arm. After removing the external force, the elastic member may rotate the first rigid arm and the second rigid arm to bring them into the neutral position.

The rigid arms may comprise rigid housings surrounding the conductor sections. The rigid housings may be provided to radially surround the conductor sections. The rigid housing may be configured to provide a mechanical support to the rigid arm. The rigid housing may be configured to provide a mechanical stability to the rigid arm. The rigid housing may be a rigid frame. The rigid housing may radially enclose the conductor section. The rigid housing may comprise a material configured to provide an electrical isolation barrier. The rigid housing may provide a mechanical and electrical isolation barrier between a user and the conductor. The rigid housing may provide an electrical isolation barrier. A mechanical stability of the rigid arm may substantially be provided by the rigid housing. Advantageously, the conductor section can be chosen without being restricted by mechanical stability requirements of the conductor section. A mechanical stability of the rigid arm may be provided by the rigid housing and the conductor section. In one embodiment, the first rigid arm comprises a first rigid housing surrounding the first conductor section and/or the second rigid arm comprises a second rigid housing surrounding the second conductor section. The first conductor section may be a flexible conductor, particularly a cable, and/or the second conductor section may be a flexible conductor, particularly a cable.

The rigid arms may comprise a flexible housing. The flexible housing may comprise a material configured to provide an electrical isolation barrier. The flexible housing may provide a mechanical and electrical isolation barrier between a user and the conductor. The conductor sections may be rigid and configured to provide a mechanical stability to the rigid arm. Advantageously, by providing a rigid conductor section a lightweight flexible housing may be provided and an overall weight of a rigid arm, particularly the charging arm system, may be reduced. In an embodiment, the first conductor section is a rigid busbar and/or the second conductor section is a rigid busbar.

The conductor sections of the rigid arms may be electrically connected. In some embodiments, the first conductor section and the second conductor section are electrically connected by a flexible conductor section such as a flexible busbar. The conductor sections may be formed integrally with each other. For example, the conductor sections may be formed integrally as cables and/or flexible busbars. In some embodiments, the first conductor section and the second conductor section are integrally formed. The conductor sections may comprise copper, aluminum, brass, any other type of conductive material, and/or combinations thereof. In some embodiments, at least one of the first conductor section and the second conductor section comprises copper, aluminum, or brass. An insulation may be provided to electrically insulate the conductor sections. The insulation may be radially surrounding the conductor sections. In an embodiment, the first rigid arm comprises an electrical insulation at least partially insulating the first conductor section and/or the second rigid arm comprises an electrical insulation at least partially insulating the second conductor section.

In some embodiments of the charging arm system, the charging connector assembly comprises a fourth rigid arm having a fourth proximal end rotatably connected to the second distal end, and a fourth distal end, a flexible cable connected to the fourth distal end, and a charging connector connected to the flexible cable. A conductor of the charging connector is electrically connected to the second conductor section. The conductor of the charging connector of the charging connector may be referred to as a fourth conductor or a charging conductor.

The conductor of the charging connector, i.e. the charging conductor, may be electrically connected to the electric vehicle charging station, particularly the power supply. The conductor of the charging connector may be connected to the electric vehicle charging station for receiving a charging power. The charging connector may be configured for connecting to a charging inlet of an electric vehicle. The conductor of the charging connector may be electrically connected to a charging inlet of an electric vehicle. The conductor of the charging connector may be electrically connected to a conductor of a charging inlet of an electric vehicle. The charging connector may be configured for providing a charging power to an electric vehicle, particularly to the charging inlet of an electric vehicle. The conductor of the charging connector may be configured for providing a charging power to an electric vehicle. The conductor of the charging connect may be configured for providing a charging power to an inlet of an electric vehicle.

In some embodiments, the charging arm system is configured for a MW electric vehicle charging station.

According to an aspect, an electric vehicle charging station for charging an electric vehicle is provided. The electric vehicle charging station includes a support structure, a power supply, and a charging arm system according to embodiments described herein. The charging arm system provides an electrical connection between the power supply and a battery of the electric vehicle for charging the electric vehicle.

The electric vehicle charging station may be a DC fast charger or a MCS, for example for electric trucks, buses, boats, ships, EVTOLs, mining trucks, AGVS or any other suitable type of electric vehicle. The electric vehicle charging station may comprise a support structure. The support structure may be a housing of the electric vehicle charging station. The support structure may comprise a vertical support structure and/or a horizontal support structure. In some embodiments, the support structure is an overhead support structure, particularly a roof structure of a charging station. In some embodiments, the first support point is attached to the support structure.

Those skilled in the art will recognise additional features and advantages upon reading the following detailed description, and upon viewing the accompanying drawings.

### Brief description of the drawings

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 shows a schematic illustration of a charging arm system for an electric vehicle charging station according to embodiments described herein.
Fig. 2 shows a schematic illustration of a charging arm system for an electric vehicle charging station according to embodiments described herein.
Fig. 3 shows a schematic illustration of a charging arm system for an electric vehicle charging station according to embodiments described herein.
Fig. 4 shows a schematic illustration of an electric vehicle charging station having a charging arm system according to embodiments described herein
Fig. 5 shows a schematic illustration of an electric vehicle charging station having a charging arm system according to embodiments described herein

### Detailed description of the drawings

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

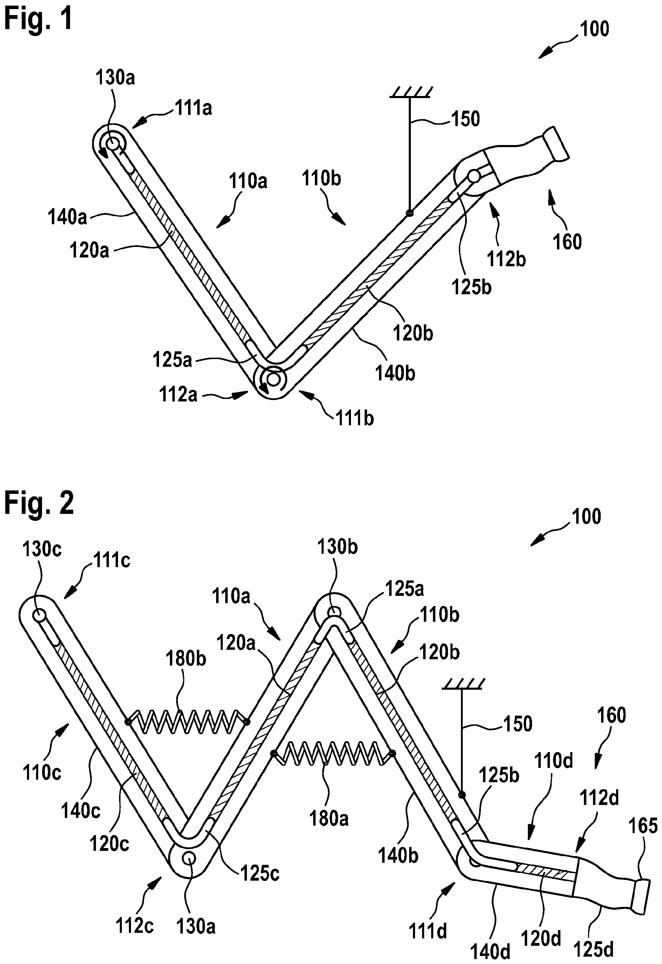

Fig. 1 is a schematic illustration of a charging arm system 100 for an electric vehicle charging station. The charging arm system 100 includes a first rigid arm 110a, a second rigid arm 110b, a charging connector assembly 160, and a vertical support 150. The first rigid arm has a first proximal end 111a and a first distal end 112a. The first proximal end is configured for connecting to a power supply. The charging arm system 100 includes a first support point 130a rotatably supporting the first proximal end. The second rigid arm 110b has a second proximal end 111b and a second distal end 112b. The second proximal end 111b is rotatably coupled to the first distal end 112a.

The first rigid arm 110a comprises a first conductor section 120a. The first conductor section extends along an extended direction of the first rigid arm 110a. The first conductor section 120a substantially extends from the first proximal end 111a to the first distal end 112a. The second rigid arm comprises a second conductor section 120b. The second conductor section extends along an extended direction of the second rigid arm 110b. The second conductor section extends along from the second proximal end 111b to the second distal end 112a. The first conductor section 120a is electrically connected to the second conductor section 120b. The first conductor section 120a is connected to the second conductor section 120b by a first flexible conductor 125a.

The first conductor section 120a and/or the second conductor section 120b may be a rigid bus bar, a flexible busbar, a cable or any other suitable type of conductor. The first conductor section 120a and/or the second conductor section 120b may comprise copper, aluminum, brass, other suitable types of conductive materials, and combinations thereof. The flexible conductor 125a may be flexible busbar. The first conductor section 120a and the second conductor section 120b may be formed integrally, for example, as a cable. In such a case the flexible conductor 125a forms part of the cable.

The charging connector assembly 160 is coupled to the second distal end 112b. The charging connector assembly 160 is configured for connecting to a charging inlet of an electric vehicle. The second conductor section 120b may be electrically connected to the charging connector assembly 160. The second conductor section 120b may be electrically connected to the charging connector assembly 160 by a second flexible conductor 125b.

The vertical support 150 may be coupled to the second rigid arm 110b or the charging connector assembly 160 for supporting the second rigid arm 110b or the charging connector assembly 160. In Fig. 1 the vertical support 150 is shown coupled to the second rigid arm 110b. The vertical support 150 may be attached to an overhead structure, for example, to an overhead support structure of the electric vehicle charging station.

The first rigid arm has a first housing 140a surrounding the first conductor 120a. The second rigid arm has a second rigid housing 140b surrounding the second conductor 120b. The first housing 140a and/or the second housing 140b may be a rigid housing. The rigid housing may provide mechanical stability to the rigid arm and/or the charging arm system 100. A flexible conductor 120a, 120b may be provided in a rigid housing 140a, 140b. The first housing and/or the second housing 140b may be a flexible housing. The first housing 140a and/or the second housing 140b may comprise a material suitable for providing an electric insulation. The first housing 140a may radially enclose the first conductor 120a. The second housing 140b may radially enclose the second conductor 120b. The first housing 140a may provide an electric insulation to the first conductor 120a. The second housing 140b may provide an electric insulation to the second conductor 120b.

Fig. 2 shows a charging arm system 100 similar to the charging arm shown in Fig 1 and having a third rigid arm 110c. The third rigid arm 110c is similar to the first rigid arm 110a and the second rigid arm 110b. The third rigid arm has a third proximal end 111c and a third distal end 112c. The third rigid arm has a third conductor section 120c. The third conductor section 120c extends along an extended direction of the third rigid arm. The third conductor section 120c extends from a third proximal end 111c to a third distal end 112c. The third conductor section 120c may be configured for connecting to a power supply. The third conductor section 110c is electrically connected to the first conductor section 110a.

The third rigid arm 110c is rotatably coupled to the first rigid arm 110a. The charging arm system 100 may include a second support point 130b rotatably supporting the second rigid arm 110b. The charging arm system 100 may include a third support point 130c rotatably supporting the third rigid arm 110c.

The charging connector assembly 160 of the charging arm system 100 shown in Fig. 2 has a fourth rigid arm 110d, a flexible cable 125d, a charging connector 165, and a conductor of the charging connector 120d, also referred to as charging conductor or fourth conductor 120d. The charging connector assembly 160 may also have a fourth housing 140d, the fourth housing 140d being similar to the first housing 140a, the second housing 140b, and/or the third housing 140c.

The fourth rigid arm has a fourth proximal end 111d rotatably connected to the second proximal end. The fourth rigid arm has a fourth distal end 112d. The flexible cable 125d may be connected to the fourth distal end 112d. The flexible cable 125d may be coupled to the fourth distal end 112d. The charging conductor 120d may be electrically connected to the second conductor section 120b. The charging conductor 120d may be electrically connected to the flexible cable 125d. The charging connector 165 may be configured for connecting to a charging inlet of an electric vehicle, particularly for providing a charging power to the electric vehicle.

The charging arm system 100 may have elastic members coupled between the rigid arms. The charging arm system 100 as shown in Fig. 2 comprises a first elastic member 180a and a second elastic member 180b. The elastic members may be any suitable elastic element that is configured to be tensioned. The first elastic member 180a is coupled to the first rigid arm 110a and the second rigid arm 110b. The first elastic member 180a may be coupled at any suitable location to the first rigid arm 110a. For example, the first elastic member 180a may be coupled proximate to the first proximal end 111a, proximate to the first distal end 112a or anywhere in-between. The first elastic member 180a may be coupled at any suitable location to the second rigid arm 110b. For example, the first elastic member 180a may be coupled proximate to the second proximal end 111b, proximate to the second distal end 112b or anywhere in-between. The second elastic member 180b is coupled to the first rigid arm 110a and the third rigid arm 110c. The second elastic member 180b may be coupled to the first rigid arm 110a at any suitable location. The second elastic member 180b may be coupled to the third rigid arm 110c at any suitable location.

The first elastic member 180a and/or the second elastic member 180b may be configured for biasing the first rigid arm and the second rigid arm into a neutral position. The first elastic member 180a and the second elastic member 180b may define a neutral position of the rigid arms to each other. A neutral position may be defined by a state in which the first elastic member 180a and/or the second elastic member 180b have a minimal tension, particularly both the first elastic member 180a and the second elastic member 180b have a minimal tension. For example, if the charging arm system shown in Fig. 2 is operated by a user to stretch the charging arm system, i.e. increasing an angle between the rigid arms, or push together the charging arm system, i.e. decreasing an angle between the rigid arms, the first elastic member 180a and/or the second elastic member 180b may be tensioned. The angle being measured between the two rigid arms on a side to which the elastic member is attached. After a user stops operating the charging arm system and/or no external forces are supplied, the first elastic member 180a and/or the second elastic member 180b may bring the charging arm system into the neutral position.

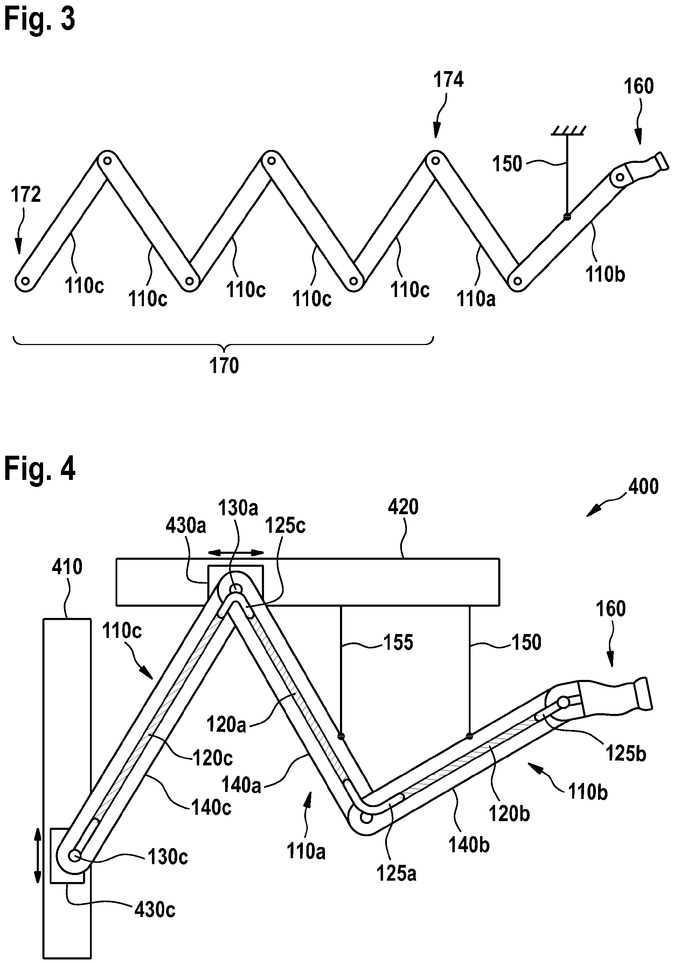

The charging arm system 100 may comprise one or more third rigid arms 110c. Fig. 3 is a schematic illustration of a charging arm system 100 having more than one third rigid arms 110c. The third rigid arms 110c are coupled to each other. The third rigid arms are coupled such that a proximal end of one third rigid arm is coupled to a proximal end of another third rigid arm. The third rigid arms 110c may be coupled to form a chain 170. The chain 170 may have chain proximal end 172 configured for connecting to a power supply and a chain distal end 174. The chain distal end 174 may be coupled to the first proximal end 111a of the first rigid arm 110a. The third conductor sections 120c of the third rigid arms 110c may be electrically connected. The third conductor sections 120c may be configured to electrically connect to a power supply. The third conductor sections 120c may be electrically connected to the first conductor section 120a.

Fig. 4 is a schematic illustration of an electric vehicle charging station 400. The electric vehicle charging station 400 may be a megawatt charging station (MCS). Particularly, the charging station 400 may be a MCS for heavy duty vehicles such as electric trucks, buses, boats, ships, EVTOLs, mining trucks, AGVs or any other suitable electric vehicle. The electric vehicle charging station 400 may be a megawatt charging station. The electric vehicle charging station 400 has a support structure including a vertical support 410 extending in a vertical direction and a horizontal support 420 extending in a horizontal direction. The horizontal support may be rotatable in a horizontal plane. The horizontal support may be rotatable around a vertical axis. The vertical support may be rotatable around a vertical axis. The electrical vehicle charging station includes a charging arm system 100 as described herein.

The electric vehicle charging station 400 has a power supply (not shown in Fig. 4). The power supply may be at a remote location. The power supply may be underground. An output of the power supply may be provided at the vertical support structure 410. The output may be electrically connected to the power supply and configured for providing a charging power. An electric connection may be provided between the power supply and the charging arm system. Particularly, the proximal end of the third conductor section may be electrically connected to the power supply. The proximal end of the third conductor section may be electrically connected to the output of the power supply. The connection between the proximal end of the third conductor section and the power supply may be provided at the vertical support structure 410. The connection between the proximal end of the third conductor section and the output of the power supply may be provided at the vertical support structure 410. The charging arm system 100 provides an electrical connection between the power supply and a battery of the electric vehicle for charging the electric vehicle.

The charging arm system 100 is according to embodiments described herein. The charging arm system 100 shown in the electric vehicle charging station 400 of Fig. 4 has a first rigid arm 110a, a second rigid arm 110b, and one third rigid arm 110c. In other embodiments, the charging arm system 100 may comprise no third rigid arm 110c or more than one third rigid arm 110c, as described herein. The charging arm system has a first support point 130a and a third support point 130c. The charging arm system 100 is attached to the support structure. The first support point 130a is attached to the support structure, particularly the horizontal support structure 420. The first support point 130a may be fixedly attached to the horizontal support structure 420. The first support point 130a may be movably attached to the horizontal support structure. The horizontal support structure may include a first mechanical fixation point 430a. The first mechanical fixation point 430a may be fixedly attached to the horizontal support structure. The first mechanical fixation point 430a may be movably attached to the horizontal support structure. The horizontal support structure may have first rails. The first rails may facilitate movement in a horizontal direction. The first mechanical fixation point may be coupled to the first rails. The first mechanical fixation point may be movable along the first rails. The first support point 130a may be attached to the first mechanical fixation point 430a. The first support point 130a may be formed integrally with the first mechanical fixation point 430a. The charging arm system may be movably attached to the horizontal support structure 320 via the first support point, such that first support point may be movably in a horizontal direction.

The third support point 130c is attached to the support structure, particularly the vertical support structure 410. The third support point 130c may be fixedly attached to the vertical support structure 410. The third support point 130c may be movably attached to the vertical support structure. The vertical support structure may include a third mechanical fixation point 430c. The third mechanical fixation point 430c may be fixedly attached to the vertical support structure. The third mechanical fixation point 430c may be movably attached to the vertical support structure. The vertical support structure may have third rails. The third rails may facilitate movement in a vertical direction. The third mechanical fixation point may be coupled to the third rails. The third mechanical fixation point may be movable along the third rails. The third support point 130c may be attached to the third mechanical fixation point 430c. The third support point 130c may be formed integrally with the third mechanical fixation point 430c. The charging arm system may be movably attached to the horizontal support structure 420 via the third support point, such that the third support point may be movably in a vertical direction.

The charging arm system has a vertical support 150 coupled to the second rigid arm 110b. The vertical support 150 is attached to the horizontal support structure 420. The vertical support 150 is for supporting the second rigid arm, particularly in a vertical direction. The charging arm system has a first-arm vertical support 155 coupled to the first rigid arm for supporting the first rigid arm. The first-arm vertical support 155 is coupled to the horizontal support structure 420.

As shown in Fig. 4 the charging arm system is fixed in two points that can move linearly, for example, on mechanical rails to provide for extension and/or retraction, weight distribution, and stability of the charging arm system. Additional extendable load support, for example vertical support 150 and first-arm vertical support 155, are provided to the non-fixed joint for further stability and weight distribution. The vertical support structure and the horizontal support structure, particularly the third rails and the first rails, can be static. The vertical support structure and/or the horizontal support structure may be rotatable around a vertical and/or a horizontal axis. The third rails and/or the first rails may be rotatable around a vertical axis and/or a horizontal axis.

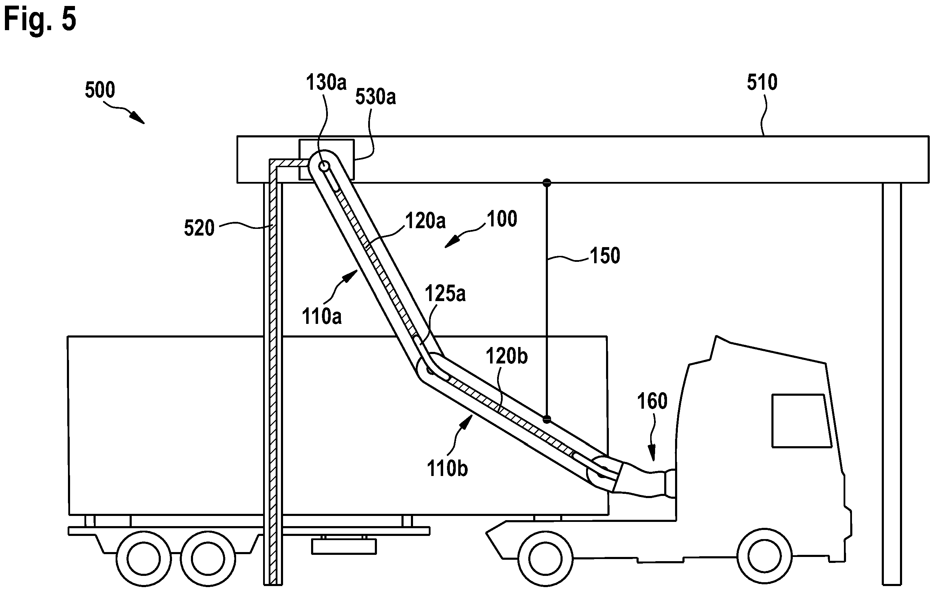

Fig. 5 is a schematic illustration of an electric vehicle charging station 500. The electric vehicle charging station 500 may be a megawatt charging station (MCS). Particularly, the charging station 500 may be a MCS for heavy duty vehicles such as electric trucks, buses, boats, ships, EVTOLs, mining trucks, AGVs or any other suitable electric vehicle. The electric vehicle charging station 500 may be a DC fast charging station. The electric vehicle charging station 500 may be a retractable overhead MCS for heavy duty vehicles such as electric trucks, buses, boats, ships, EVTOLs, mining trucks, AGVs, or any other suitable electric vehicle. The electric vehicle charging station 500 has a support structure 510. The support structure 510 is an overhead support structure. The overhead support structure may be comprised in or be a roof structure. The roof structure may be a pre-installed roof structure, for example a pre-installed roof structure for installing solar panels. The electric vehicle charging station 500 includes a charging arm system according to embodiments described herein.

The electric vehicle charging station 500 includes a power supply (not shown). The power supply may be at a remote location. The power supply may be underground. An output 520 of the power supply may be provided at the horizontal support structure 510. The output may be electrically connected to the power supply and configured for providing a charging power. The charging arm system provides an electrical connection between the power supply and a battery of the electric vehicle for charging the electric vehicle. The charging arm system may be electrically connected to the power supply. The charging arm system may be electrically connected to the output of the power supply. The first conductor section may be connected to the power supply. The first conductor section may be connected to the output of the power supply. The first conductor section may be connected to the output of the power supply at the horizontal support structure 510.

The charging arm system 100 is according to embodiments described herein. The charging arm system 100 includes a first rigid arm 110a, a second rigid arm 110b, a rotational support point 130a, a vertical support 150 and a charging connector assembly 160. The charging arm system 100 is attached to the horizontal support structure 510. The rotational support point is attached to the horizontal support structure. The rotational support point may be fixedly attached to the horizontal support structure. The rotational support point may be movably attached to the horizontal support structure, such that the rotational support point can be moved in a horizontal direction.

The horizontal support structure 510 may include a first mechanical fixation point 530a. The first mechanical fixation point 530a may be attached to the horizontal support structure 510. The first mechanical fixation point 530a may be fixedly attached to the horizontal support structure 510. The first mechanical fixation point 530a may be movably attached to the horizontal support structure 510, such that the first mechanical fixation point can be moved in a horizontal direction. The horizontal support structure may have first rails. The first rails may facilitate movement in a horizontal direction. The first mechanical fixation point may be coupled to the first rails. The first mechanical fixation point may be movable along the third rails.

The vertical support 150 is coupled the second rigid arm for supporting the second rigid arm in a vertical direction. The vertical support 150 may be coupled to the horizontal support structure 510.

The charging station for an electric vehicle as shown in Fig. 5 may provide an overhead system for truck charging. Most of the concept for truck charging depots assume a roof cover for installing solar panels. The roof structure can be used to fix the charging arm system according to the present disclosure. Apart from the main fixation point, i.e. the fixation at the first rotational support point, due to conductor weight, additional load support points for the carrier are provided, i.e. the vertical support 150. The additional load support by the vertical support 150 can, for example, be achieved with extendable hanging cords, spring joints or similar flexible mechanical holding structures. The first support point rotatably supports the first rigid arm to increase freedom of movement.

While the foregoing is directed to embodiments, other and further embodiments may be devised without departing from the basic scope, and the scope is determined by the claims that follow.

## Claims

1. A charging arm system for an electric vehicle charging station, the charging system comprising:
a first rigid arm having a first proximal end and a first distal end, the first proximal end configured for connecting to a power supply;
a first support point rotatably supporting the first proximal end;
a second rigid arm having a second proximal end and a second distal end, the second proximal end being rotatably coupled to the first distal end;
a charging connector assembly coupled to the second distal end and configured for connecting to a charging inlet of an electric vehicle; and
a vertical support coupled to the second rigid arm or the charging connector assembly for supporting the second rigid arm or the charging connector assembly;
wherein the first rigid arm comprises a first conductor section and the second rigid arm comprises a second conductor section, and the first conductor section and the second conductor section are electrically connected for providing electric power from the power supply to the electric vehicle.

2. The charging arm system according to claim 1, wherein the first support point is attachable to the electric vehicle charging station, particularly attachable to an overhead support structure of the electric vehicle charging station.

3. The charging arm system according to any one of claims 1 through 2, comprising a first-arm vertical support coupled to the first rigid arm for supporting the first rigid arm.

4. The charging arm system according to any one of claims 1 through 3, comprising an elastic member configured for biasing the first rigid arm and the second rigid arm into a neutral position.

5. The charging arm system according to any one claims 1 through 4, wherein the first rigid arm comprises a first rigid housing surrounding the first conductor section and/or the second rigid arm comprises a second rigid housing surrounding the second conductor section.

6. The charging arm system according to claim 5, wherein the first conductor section is a flexible conductor, particularly a cable, and/or the second conductor section is a flexible conductor, particularly a cable.

7. The charging arm system according to any one of claims 1 through 6, wherein the first conductor section is a rigid busbar and/or the second conductor section is a rigid busbar.

8. The charging arm system according to any one of claims 1 through 7, wherein the first conductor section and the second conductor section are electrically connected by a flexible conductor section such as a flexible busbar.

9. The charging arm system according to claim 6, wherein the first conductor section and the second conductor section are integrally formed.

10. The charging arm system according to any one of claims 1 through 9, comprising at least one third rigid arm having a third proximal end connectable to the power supply and a third distal end coupled to the first proximal end, the at least one third rigid arm comprising third conductor sections that are electrically connected to the first conductor section, particularly comprising at least one third support point rotatably supporting the third proximal end, more particularly the third support point being attachable to a support structure of the electric vehicle charging station.

11. The charging arm system according to any one of claims 1 through 10, wherein the charging connector assembly comprises:
a fourth rigid arm having a fourth proximal end rotatably connected to the second distal end, and a fourth distal end;
a flexible cable connected to the fourth distal end; and
and a charging connector connected to the flexible cable,
wherein a conductor of the charging connector is electrically connected to the second conductor section.

12. The charging arm system according to any one of claims 1 through 11, wherein the charging arm system is configured for a MW electric vehicle charging station.

13. An electric vehicle charging station for charging an electric vehicle comprising:
a support structure;
a power supply; and
a charging arm system according to any one of claims 1 through 12;
wherein the charging arm system provides an electrical connection between the power supply and a battery of the electric vehicle for charging the electric vehicle.

14. The electric vehicle charging station according to claim 13, wherein the first support point is attached to the support structure.

15. The charging arm system according to any one of claims 13 and 14, wherein the support structure is an overhead support structure, particularly a roof structure of a charging station.
